# EUROPÄISCHE PATENTANMELDUNG

(11) **EP 0 642 869 A1**
(43) Veröffentlichungstag der Anmeldung: **15.03.1995**
(21) Anmeldenummer: 94114261.4
(22) Anmeldetag: 10.09.1994
(51) Int. Cl.: B23H 11/00, B23H 7/26

(54) **Funkenerosionsmaschine**

(30) Priorität: 13.09.1993 DE 4330885
(71) Anmelder: EXERON Erodiertechnologie GmbH, D-78737 Fluorn-Winzeln (DE)
(72) Erfinder: Knecht, Hans, D-72766 Reutlingen-Mittelstadt (DE)
(74) Vertreter: Patentanwälte Westphal, Buchner, Mussgnug Neunert, Göhring

(57) **Zusammenfassung**

Eine Funkenerosionsmaschine besitzt einen Arbeitskopf (10), der aus dem durch eine Aufspannplatte (23) definierten Arbeitsbereich heraus seitlich verfahrbar ist. Der Arbeitskopf (10) besitzt ein Spannfutter (11), welches nicht nur Elektroden (110) für die Bearbeitung eines auf einer Palette (100) befestigten Werkstücks, sondern auch eines Transportgreifers (120) bestimmt ist. Der Transportgreifer (120) dient dazu, die Paletten (100) zu erfassen und dem Arbeitsbereich (23) zuzuführen bzw. von ihm abzuführen. Die Elektroden (110) und die Paletten (100) sind an einem Tellerwechsler (30) magaziniert, der sich unmittelbar neben dem Arbeitsbereich (23) im Maschinenbett integriert befindet. Eine ohnehin vorhandene CNC-Steuerung (40) muß lediglich geringfügig modifiziert werden, so daß der Arbeitskopf (10) nicht nur zur Bearbeitung, sondern auch zum Wechseln von Elektroden (110) und Paletten (100) geeignet ist. Ein bisher üblicher, separater Roboter kann somit vollständig entfallen. Auch gelingt eine äußerst kompakte Bauweise.

## Beschreibung

Die Erfindung betrifft eine Funkenerosionsmaschine gemäß Oberbegriff des Anspruchs 1.

Derartige Funkenerosionsmaschinen dienen zur Bearbeitung von Werkstücken, die auf Paletten montiert sind. Hierzu ist ein Arbeitskopf auf Führungen gelagert und mittels einer CNC-Steuerung in allen drei Koordinatenrichtungen, d. h. in X-, Y- und Z-Richtung verfahrbar. Unterhalb des Arbeitskopfs befindet sich ein Arbeitsbereich, der im wesentlichen von einer Aufspannplatte gebildet ist. An der Aufspannplatte ist ein automatisches Spannfutter vorgesehen, welches die Paletten mit den darauf befestigten Werkstücken während der Bearbeitung fixiert. Die Aufspannplatte einschließlich Spannfutter ist in einem Behälter angebracht, der ein Dielektrikum enthält. Sämtliche Baugruppen der Funkenerosionsmaschine sind von einem Maschinenbett aufgenommen, in die auch eine Filteranlage für die das Dielektrikum integriert ist.

Mit Hilfe der CNC-Steuerung ist es möglich, die am Arbeitskopf bzw. an der Pinole anbringbare, auswechselbare Elektrode in bezug auf das zu bearbeitende Werkstück exakt zu verfahren. Die Zu- und Abführung der Werkstückpaletten und der Elektroden erfolgt durch einen Roboter, der neben der Funkenerosionsmaschine angeordnet ist. Der Roboter kann mit einem an einem Greifarm befestigten Greifer einerseits Elektroden erfassen, die in einem Magazin bevorratet sind und diese am Arbeitskopf anbringen. Hierzu ist am Arbeitskopf ein automatisches Spannfutter vorgesehen, das die Elektrode erfaßt und festhält. Andererseits bedient der Roboter ein weiteres Magazin, in welchem mit Werkstücken bestückte Paletten bevorratet sind. Der Greifer erfaßt hierbei die Palette und führt diese dem Arbeitsbereich zu. Dort wird die Palette mittels des automatischen Spannfutters fixiert. Während des Bearbeitungsvorgangs wird der Greifarm des Roboters aus dem Arbeitsbereich entfernt und der Arbeitskopf erodiert programmtesteuert die gewünschte Kontur.

Der Nachteil derartiger Funkenerosionsmaschinen besteht darin, daß sie sehr teuer sind. Dies betrifft nicht nur die Funkenerosionsmaschine selbst, sondern insbesondere die Vernetzung mit einem Roboter, der die erforderliche Zu- und Abfuhr von Elektroden und Paletten bewerkstelligt.

Der Erfindung lag deshalb das Problem zugrunde, eine Funkenerosionsmaschine der eingangs genannten Art derart weiterzuentwickeln, daß die geschilderten Nachteile nicht mehr auftreten.

Gelöst wird dieses Problem mit einer Funkenerosionsmaschine, die die Merkmale des Anspruchs 1 aufweist. Vorteilhafte Ausgestaltungsformen der Erfindung sind durch die Merkmale der Unteransprüche wiedergegeben.

Der Vorteil der erfindungsgemäßen Funkenerosionsmaschine besteht darin, daß die ohnehin erforderliche CNC-Steuerung geringfügig modifiziert wird, so daß der Arbeitskopf nicht nur zur Bearbeitung der Werkstücke dient, sondern gleichzeitig den Elektroden- und Palettenwechsel durchführen kann.

In einer bevorzugten Ausführungsform werden deshalb die Führungen für die horizontal verlaufende X-Richtung seitlich über den Arbeitsbereich hinaus verlängert. Im Bereich der verlängerten Führungen wird unmittelbar benachbart zum Arbeitsbereich ein Tellerwechsler vorgesehen, der zwei koaxial übereinander, auf einer gemeinsamen Welle angeordnete Drehteller besitzt. Einer der beiden Drehteller nimmt die Elektroden, der andere der beiden Drehteller die Paletten auf. Nunmehr ist es möglich, mit dem Arbeitskopf bzw. der Arbeitspinole den Drehteller zu bedienen. Um den unterschiedlichen Aufgaben gerecht zu werden, ist der Arbeitskopf mit einem Transportgreifer ausgestattet, der an dem automatischen Spannfutter für die Elektroden anbringbar ist. Der Transportgreifer befindet sich normalerweise an einer Lagerposition desjenigen Drehtellers, der die Elektroden haltert. Zum Wechsel einer Palette fährt der Arbeitskopf in eine Übergabeposition für den Drehteller und legt die Elektrode ab. Danach übernimmt er den Transportgreifer und erfaßt eine zum Wechsel vorgesehene Palette. Die Palette wird zur gewünschten Position verbracht bzw. eine zur Bearbeitung anstehende in den Arbeitbereich eingebracht und auf das Spannfutter aufgesetzt. Nunmehr fährt der Arbeitskopf zum Drehteller zurück und wechselt den nicht mehr benötigten Transportgreifer gegen die für die Bearbeitung erforderliche Elektrode.

Auf diese Weise gelingt es, eine Funkenerosionsmaschine mit geringfügigen Modifikationen so zu gestalten, daß ein Roboter vollständig entfallen kann. Ein weiterer Vorteil liegt darin, daß das Maschinenbett nur relativ geringfügig vergrößert werden muß, um die Magazine für die Elektroden und die Paletten mit aufzunehmen. Dies ermöglicht eine äußerst platzsparende und kompakte Bauweise.

Gemäß einer bevorzugten Ausführungsform ist im Maschinenbett eine Auffangwanne integriert, die sich unterhalb des Drehtellers befindet und von fertig bearbeiteten Werkstücken abtropfendes Dielektrikum auffängt und der ohnehin vorhandenen Filteranlage zuführt. Dies ist ein bedeutender Beitrag zur umweltgerechten Konzeption einer derartigen Fertigungseinheit.

Gemäß einer weiteren, bevorzugten Ausführungsform ist der das Dielektrikum enthaltende Behälter im Maschinenbett absenkbar, so daß der Drehteller besonders gut erreichbar ist und eine Maschine mit relativ niedriger Höhe realisierbar ist.

Die Erfindung wird anhand des in den Figuren schematisch dargestellten Ausführungsbeispiels näher erläutert.

Es zeigen:
- Figur 1: Funkenerosionsmaschine in Seitenansicht,
- Figur 1a: vergrößerte Einzelheit, und
- Figur 2: Funkenerosionsmaschine gemäß Figur 1 in Draufsicht.

Die Funkenerosionsmaschine umfaßt ein Maschinenbett 20, welches sämtliche Baugruppen integriert aufnimmt. In bezug auf das Maschinenbett 20 sind die beiden Koordinatenrichtungen X und Y horizontal verlaufend, die Z-Richtung vertikal verlaufend.

Im Maschinenbett 20 ist ein Behälter 21 absenkbar angeordnet, der mit Dielektrikum 22 gefüllt ist. Innerhalb des Behälters 21 befindet sich eine Aufspannplatte 23 mit einem Spannfutter 24, das zur Aufnahme einer ein Werkstück 101 tragende Palette 100 bestimmt ist. Der Bereich der Aufspannplatte 23 ist der eigentliche Arbeitsbereich, der von einem Arbeitskopf 10 überstrichen werden kann. Der Arbeitskopf 10 trägt ein Spannfutter 11, welches zur Aufnahme einer Elektrode 110 vorgesehen ist. Das Spannfutter 11 kann alternativ auch einen Transportgreifer 120 aufnehmen, der eine Palette 100 greifen kann.

Der Arbeitskopf 10 ist auf Führungen gelagert, die eine Verschiebung in alle drei Koordinatenrichtungen zulassen. Gemäß Figur 2 sind Führungen 12 für eine Verschiebebewegung in X-Richtung vorhanden. Die Führungen 12 überstreichen nicht nur den Arbeitsbereich 23, wie dies für Zwecke der Bearbeitung des Werkstücks 101 vonnöten wäre, sondern sind in der Darstellung gemäß Figur 2 nach links verlängert ausgeführt. Hierdurch ist es möglich, den Arbeitskopf 10 aus dem Arbeitsbereich 23 heraus zu verfahren.

Außerhalb des Arbeitsbereichs 23, diesem jedoch unmittelbar benachbart, ist ein Tellerwechsler 30 angebracht. Dieser weist einen Drehteller 31 und einen Drehteller 32 auf, die koaxial beabstandet an einer vertikal verlaufenden Welle angebracht sind. Der Drehteller 31 trägt die Elektroden 110 und der Drehteller 32 die Paletten 100. Die Welle 33 und damit der Tellerwechsler 30 sind programmgesteuert rotierend antreibbar, so daß der Tellerwechsler 30 hinsichtlich seiner Winkellage exakt positioniert werden kann.

Unterhalb des Tellerwechslers 30 ist eine Auffangwanne 26 vorgesehen, die im Maschinenbett 20 integriert und mit einer Filteranlage 25 für das Dielektrikum 22 gekoppelt ist. Dies ermöglicht eine sichere Aufnahme des von dem Tellerwechsler 30 bzw. den fertig bearbeiteten Werkstücken abtropfende Dielektrikums.

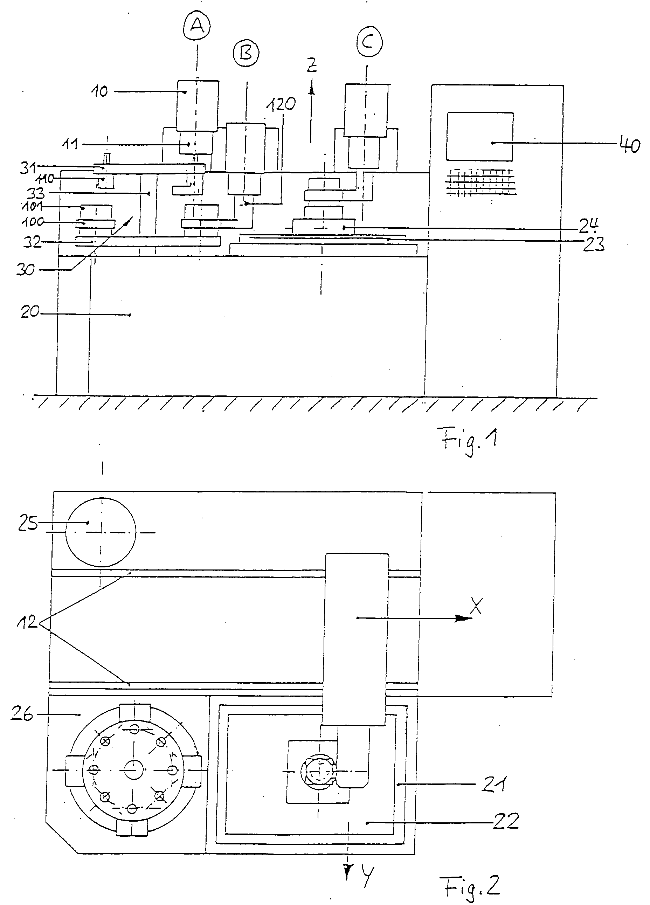

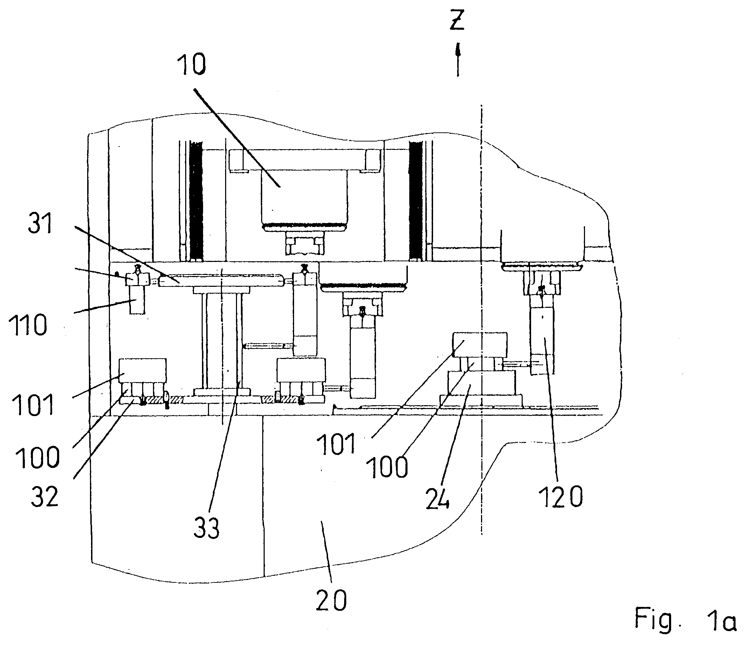

In der Figur 1 sind verschiedene Positionen A, B, C des Arbeitskopfs 10 angedeutet.

In der Position A befindet sich der Arbeitskopf 10 in einer Aufnahme- bzw. Ablageposition für den Transportgreifer 20, die am Tellerwechsler 30 vorgesehen ist.

Die Position B charakterisiert die Aufnahme- bzw. Ablegeposition für die Palette 100. Dies kann einerseits eine Aufnahmeposition für ein zur Bearbeitung anstehendes Werkstück 101 bzw. die Rückgabeposition eines fertig bearbeiteten Werkstücks 101 sein.

Die Position C schließlich zeigt die Aufspannposition für die Palette 100 zu Beginn bzw. am Ende eines Bearbeitungsvorgangs.

Hier nicht dargestellt ist die Position des Arbeitskopfs 10 während der eigentlichen Bearbeitung des Werkstücks 101. Dann ist der Transportgreifer 120 gegen die Elektrode 110 ausgetauscht und exakt auf das Werkstück 101 ausgerichtet und nachgeführt.

### FIGURENLEGENDE

- 10: Arbeitskopf
- 11: Spannfutter
- 12: Führung (X-Richtung)
- 20: Maschinenbett
- 21: Behälter
- 22: Dielektrikum
- 23: Aufspannplatte
- 24: Spannfutter
- 25: Filteranlage
- 26: Auffangwanne
- 30: Tellerwechsler
- 31: Drehteller
- 32: Drehteller
- 33: Welle
- 40: CNC-Steuerung
- 100: Palette
- 101: Werkstück
- 110: Elektrode
- 120: Transportgreifer

## Patentansprüche

1. Funkenerosionsmaschine zur Bearbeitung von auf Paletten montierten Werkstücken mittels Elektroden mit
- einem Arbeitskopf, der auf Führungen gelagert und mittels einer CNC-Steuerung in allen drei Koordinatenrichtungen verfahrbar ist,
- einem Arbeitsbereich, der von einer mit einem automatischen Spannfutter für die bestückten Paletten versehenen Aufspannplatte gebildet ist, die unterhalb des Arbeitskopfs in einem ein Dielektrikum enthaltenden Behälter angebracht ist,
- einer integrierten Filteranlage für das Dielektrikum, sowie
- einem sämtliche Baugruppen aufnehmenden Maschinenbett,
dadurch gekennzeichnet, daß die CNC-Steuerung (40) derart modifiziert ist, daß der Arbeitskopf (10) außer zur Bearbeitung der Werkstücke (101) auch zum Wechseln der Elektroden (110) und der Paletten (100) einsetzbar ist.

2. Funkenerosionsmaschine nach Anspruch 1, dadurch gekennzeichnet, daß
- die Führungen (12) für zumindest eine der beiden horizontal verlaufenden Richtungen (X; Y) seitlich über den Arbeitsbereich (23) hinausgeführt sind,
- der Arbeitskopf (10) mit einem automatischen Spannfutter (11) ausgestattet ist, welches alternativ die Elektroden (110) oder einen Transportgreifer (120) für die Paletten (100) aufnehmen kann, sowie
- ein Tellerwechsler (30) dem Arbeitsbereich (23) unmittelbar benachbart im Maschinenbett (20) derart angebracht ist, daß er vom Arbeitskopf (10) bedient werden kann, wobei der Tellerwechsler (30) aus zwei koaxial übereinander auf einer gemeinsamen Welle (33) angeordneten Drehtellern (31, 32) besteht, wovon der eine Drehteller (31) zur Aufnahme der Elektroden (110) und des Transportgreifers (120) und der andere Drehteller (32) zur Aufnahme der Paletten (100) bestimmt ist, und die Welle (33) über die CNC-Steuerung (40) positionierend drehbar ist.

3. Funkenerosionsmaschine nach einem der vorstehenden Ansprüche, dadurch gekennzeichnet, daß der Behälter (21) programmgesteuert während des Wechselns der Paletten (100) und/oder Elektroden (110) absenkbar ist.

4. Funkenerosionsmaschine nach einem der vorhergehenden Ansprüche, dadurch gekennzeichnet, daß im Maschinenbett (20) eine Auffangwanne (26) unterhalb des Tellerwechslers (30) integriert ist.
